# FASCICULE DE BREVET EUROPEEN

(11) **EP 1 484 931 B1**
(45) Date de publication et mention de la délivrance du brevet: **12.04.2006**
(21) Numéro de dépôt: 04291333.5
(22) Date de dépôt: 27.05.2004
(51) Int. Cl.: H04Q 7/22

(54) **Procédé d'émission et de réception de SMS et terminal de télécommunication adapté**
Verfahren zum Senden und Empfangen von SMS und angepasstes Kommunikationsendgerät
Method for transmitting and receiving SMS and adapted communication terminal

(30) Priorité: 02.06.2003 FR 0306624
(43) Date de publication de la demande: 08.12.2004
(73) Titulaire: SAGEM Communication, 75015 Paris (FR)
(72) Inventeur: Leloup, Philippe, 75020 Paris (FR); Deliveyne, Pierre, 95800 Cergy Le Haut (FR)
(74) Mandataire: Bloch, Gérard

(56) Documents cités:
- WO-A-01/58185
- WO-A-02/35866
- WO-A-02/063894

## Description

### DOMAINE TECHNIQUE DE L'INVENTION

L'invention concerne le domaine des télécommunications et plus particulièrement les services de messages courts, connus sous les noms de Short Message Service (SMS), Enhanced Messaging Service (EMS) ou Multimedia Message Service (MMS).

### ARRIERE-PLAN TECHNOLOGIQUE

On connaît et on utilise couramment les services SMS sur les réseaux de télécommunication cellulaire du type GSM (Global System for Mobile communication), par l'intermédiaire de serveurs connectés à ces réseaux et appelés SM-SC (Short Message Service Centre), généralement entre un terminal mobile émetteur et un terminal mobile destinataire. Sur l'interface utilisateur du terminal émetteur, l'utilisateur compose un message alphanumérique, le numéro du terminal destinataire souhaité et le terminal émetteur complète automatiquement le SMS ainsi composé par le numéro du SM-SC avant de l'émettre selon le protocole SMS du réseau. Le numéro du terminal émetteur est aussi transmis, soit par le terminal, soit par le réseau (au moyen du service CLIP). Le SM-SC reçoit le message et, selon une technique dite "stocke et transmet"' ("store and forward"), transmet finalement le message au terminal destinataire.

Ce genre de communication n'est réalisé que dans des réseaux de téléphonie cellulaire mais est également envisagé pour les réseaux filaires, du type RTC (Réseau Téléphonique Commuté) ou RNIS (Réseau Numérique à Intégration de Service) ou leurs équivalents PSTN (Public Switched Telephone Network) ou ISDN (Integrated Services Digital Network).

Par exemple la demande de brevet internationale **WO01/20929,** publiée le 22 mars 2001 au nom de la société TMX, décrit un procédé et un dispositif de ce type pour transmettre des SMS entre un poste fixe et un téléphone cellulaire, mais aussi entre deux postes fixes.

L'ETSI (European Telecommunications Standards Institute) a publié la norme ES 201 912 précisant deux protocoles d'échanges à respecter, désignés ci-après sous les appellations de protocole 1 (ou P1) et protocole 2 (ou P2). Quel que soit le protocole utilisé, la transmission d'un message s'effectue par établissement d'une communication vocale, en V.23 half duplex, selon des trames de données binaires et une technique dite FSK (Frequency Shift Keying), chaque valeur d'un bit étant représentée par une fréquence différente : 1300 Hz pour "1", ou Mark bit, et 2100 Hz pour "0", ou Space, ces valeurs se succédant à une fréquence de 1200 bauds (Tout autre modulation FSK comparable, notamment la modulation Bell202, conviendrait également). Pour établir une connexion avec le centre SM-SC par le réseau filaire, le protocole 1 utilise les mêmes couches d'application et de transfert que le protocole GSM par le réseau GSM (Celles utilisées par le protocole 2 sont comparables), mais les couches physique (PL, Physical Layer) et de données (DLL, Data Link Layer) en diffèrent.

Pour émettre un message vers un terminal destinataire, le terminal émetteur compose le numéro du centre SM-SC (ou du terminal récepteur), avant que ce centre ne se connecte et initialise le transfert demandé par l'envoi d'une trame d'initialisation de transfert.

Selon le protocole utilisé, la structure de cette trame n'est pas la même.

Or, ces protocoles 1 et 2 offrent des possibilités différentes. Notamment, le protocole 2 est beaucoup plus riche et permet, par exemple, le transfert de données, textuelles, vocales, de type numérique, télécopie, informatique, vidéo. Aussi, certains opérateurs l'ont choisi, tandis que d'autres préfèrent le protocole 1, plus proche du protocole utilisé dans le réseau GSM et plus facile à interfacer avec l'existant et à déployer.

Cette situation entraîne la coexistence probable de deux types de centres SM-SC et de terminaux "SMS".

Or, fabriquer et vendre des terminaux SMS compatibles P1 d'une part et des terminaux SMS compatibles P2 d'autre part nécessite un dédoublement des chaînes logistiques et de production et par conséquent un surcoût.

Pour résoudre le problème de l'emploi de plusieurs protocoles ayant des formats de données incompatibles, la demande de brevet internationale WO02/35866 publiée le 2 mai 2002 au nom de la société CELLEMETRY, divulgue un système et une méthode complexes faisant appel à des centres convertisseurs de protocoles.

Mais l'adaptation des terminaux pour échanger des SMS selon les protocoles P1 ou P2 selon la norme ES 201 912 ne semble pas exiger en fait une aussi grande complexité.

### DESCRIPTION GENERALE DE L'INVENTION

L'invention présentée permet d'éviter le surcoût lié à la duplication des terminaux selon les protocoles utilisés grâce à la mise en oeuvre d'un procédé simple. Il permet également à l'utilisateur d'avoir accès aux serveurs d'opérateurs concurrents qui n'auraient pas choisi le même protocole.

A cet effet, l'invention concerne un procédé d'établissement d'une communication sur un réseau de téléphonie fixe selon au moins un protocole de service de message court normalisé entre une première station et une seconde station, comportant successivement de manière connue:
- une étape de prise de ligne et de numérotation d'un numéro de téléphone courant par la première station,
- une étape de décroché et d'envoi par la seconde station sur le réseau de téléphonie à destination de la première station d'un message d'établissement (DLL_SMS_EST) formant une trame de données comportant un préambule,
- une étape de soumission du contenu d'un message court par la première station à destination de la seconde station,

La caractéristique essentielle du procédé selon l'invention est qu'il comporte de plus une étape d'identification préalable à l'étape de soumission consistant à identifier dans ledit préambule du message d'établissement (DLL_SMS_EST) la structure binaire spécifique au protocole courant. L'étape de soumission soumet alors le contenu du message court selon le protocole courant déterminé pendant l'étape d'identification.

Avantageusement, l'étape d'identification consiste encore à associer un code d'identification courant au protocole courant. Le code d'identification associé au protocole courant est de préférence stocké pour un usage ultérieur.

Selon une autre caractéristique du procédé d'établissement d'une communication sur un réseau de téléphonie fixe selon l'invention, l'étape d'identification du protocole courant consiste de plus à détecter dans le préambule du message d'établissement (DLL_SMS_EST) la présence ou l'absence d'au moins un mot prédéterminé, de préférence le mot 13h (notation hexadécimale), caractéristique d'un premier protocole (P1) prédéterminé.

Alternativement ou simultanément, l'étape d'identification consiste de plus à détecter au début du préambule du message d'établissement (DLL_SMS_EST) la présence ou l'absence d'une suite alternée de bits en nombre prédéterminé, au plus égal à 600, caractéristique d'un second protocole (P2) prédéterminé.

L'invention concerne également un terminal de télécommunication comportant classiquement des moyens d'émission et de réception de SMS pour émettre et recevoir des messages courts vers et d'un SM-SC ou terminal tiers selon un protocole normalisé, un microprocesseur, une mémoire vive et une mémoire programme contenant au moins un programme de gestion d'un protocole normalisé.

Ce terminal est adapté à la mise en oeuvre du procédé selon l'invention par le fait qu'il comporte en outre :
- des moyens de détermination automatique du protocole courant du SM-SC ou terminal tiers,
- des moyens de lancement et d'exécution du programme courant correspondant au protocole courant.

Ainsi, lors d'une émission de message, le protocole utilisé est déterminé par détermination de celui qui est utilisé dans le terminal récepteur, ou le SM-SC intermédiaire.

Fort avantageusement, les moyens de détermination automatique que comporte le terminal de télécommunication selon l'invention comprennent un automate, de préférence un compteur de caractères.

Alternativement ou simultanément, ces moyens de détermination comprennent un comparateur d'un nombre prédéterminé de bits.

De préférence, le terminal comporte un emplacement en mémoire contenant le dernier protocole utilisé.

De préférence aussi, le terminal comporte un annuaire qui associe un protocole à utiliser au numéro de destinataire SM-SC ou terminal destinataire.

De préférence encore, le microprocesseur met à jour, dans l'annuaire, les numéros d'appel des terminaux destinataires, des SM-SC, et des protocoles correspondants à utiliser. Toutes ces informations n'ont ainsi pas besoin d'être collectées et mémorisées en usine et n'exigent pas d'opérations de maintenance.

L'invention sera mieux comprise à l'aide de la description suivante et du dessin l'accompagnant.

### BREVE DESCRIPTION DES DESSINS

- la figure 1 est un schéma de principe d'un réseau de communication permettant la transmission de messages courts ;
- la figure 2 est un schéma de principe du fonctionnement des transmissions dans un réseau du type de celui de la figure 1 ;
- la figure 3 montre la structure des messages courts selon les protocoles 1 et 2 ;
- la figure 4 est un diagramme général de fonctionnement d'une émission d'un message court,
- la figure 5 est un diagramme détaillé illustrant le procédé d'émission d'un message court selon l'invention et
- la figure 6 est un schéma par blocs fonctionnels d'un terminal selon l'invention.

### DESCRIPTION DES MODES DE REALISATION PREFERES DE L'INVENTION

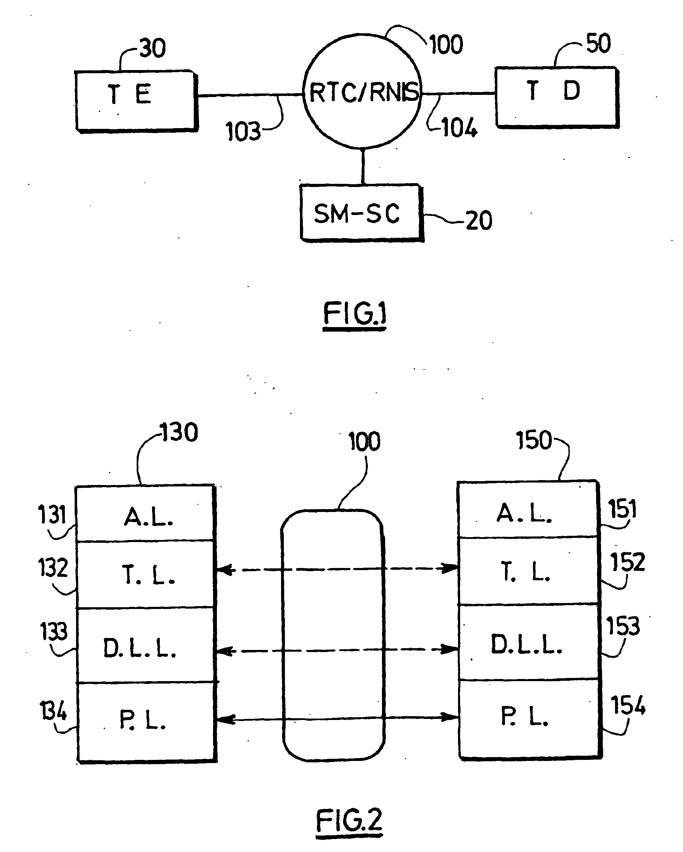

En référence à la figure 1, le terminal émetteur (TE) 30, par une liaison filaire 103 du réseau RTC ou RNIS 100, transmet ordinairement ses messages courts à un terminal destinataire (TD) 50, lui-même relié au réseau par une liaison filaire 104, par l'intermédiaire d'un serveur 20, centre de distribution des messages courts, ou "Short Message Service Centre", en abrégé SM-SC.

Pour exécuter ces transmissions entre deux terminaux 130, 150, ou entre un terminal et un SM-SC, les terminaux (voir en figure 2) émetteur et destinataire comportent chacun une couche physique ou "Physical Layer" (PL) 134, 154 pour, à travers le réseau 100, émettre ou recevoir physiquement les signaux transitant dans le réseau, une couche logique ou "Data Link Layer" (DLL) 133, 153, une couche de transfert ou "Transfer Layer" 132, 152, et une couche applicative ou "Application Layer" 131, 151. Dans le cas du protocole 1, ces deux dernières couches sont identiques pour les réseaux filaires et pour les réseaux GSM, et sont donc bien connues.

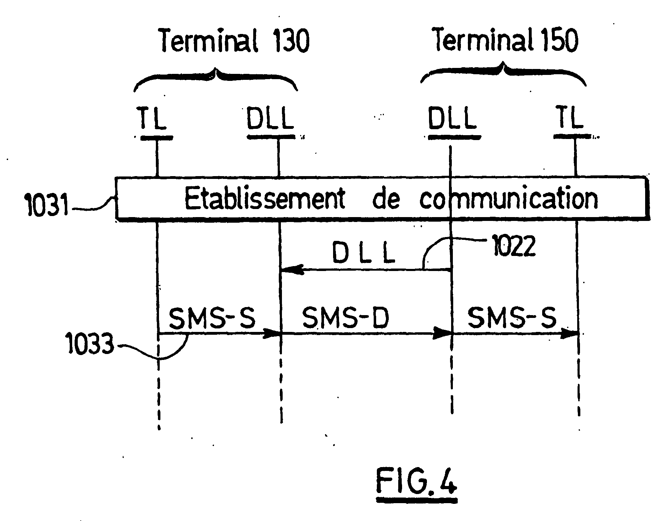

Les deux autres couches sont spécifiques des réseaux filaires et sont décrites par les documents ETSI ES 201 912 pour la couche DLL et ES 201 912 et EN 300 659-2 /EN 300 778-2 pour la couche PL. Le fonctionnement est le suivant. Quand l'utilisateur lance une émission de message court sur son terminal 130, ce dernier établit, en référence à la figure 4, une communication vocale ordinaire 1031 avec le SM-SC ou le terminal récepteur 150 au travers des couches physiques (PL) des deux terminaux et du réseau, soit par numérotation DTMF (Ou décimale) s'il s'agit du réseau RTC, soit par le canal D s'il s'agit du réseau RNIS (ou par le moyen d'établissement pour un autre réseau qui fournirait le même service que le RTC ou le RNIS). Le terminal récepteur émet alors une trame FSK puisque la numérotation adresse un SM-SC, ou un terminal équipé pour émettre et recevoir des messages courts, et, s'il est par exemple spécifiquement sollicité par une extension au numéro d'appel, consistant en un message ou trame d'initialisation de transfert 1022, initié par sa couche DLL 153 et transmise par sa couche physique 154 selon une transmission FSK conformément à la spécification ES 201 912 et EN 300 659-2 (ou toute autre FSK comparable).

La connexion est alors prête pour une transmission 1033 du message court par le terminal émetteur 130. Elle va s'effectuer selon un protocole V.23 half duplex 10, 11, 12. C'est la couche de transfert 132 qui transmet, de l'application 131, le message SMS à la couche logique 133 (DLL), laquelle élabore les trames FSK du message pour la couche physique 134. La couche physique 154 reçoit ces trames FSK du message conformément à la norme ES 201 912 et EN 300 778-2 (ou toute autre FSK comparable) pour les transmettre aux couches supérieures jusqu'à la couche applicative 151.

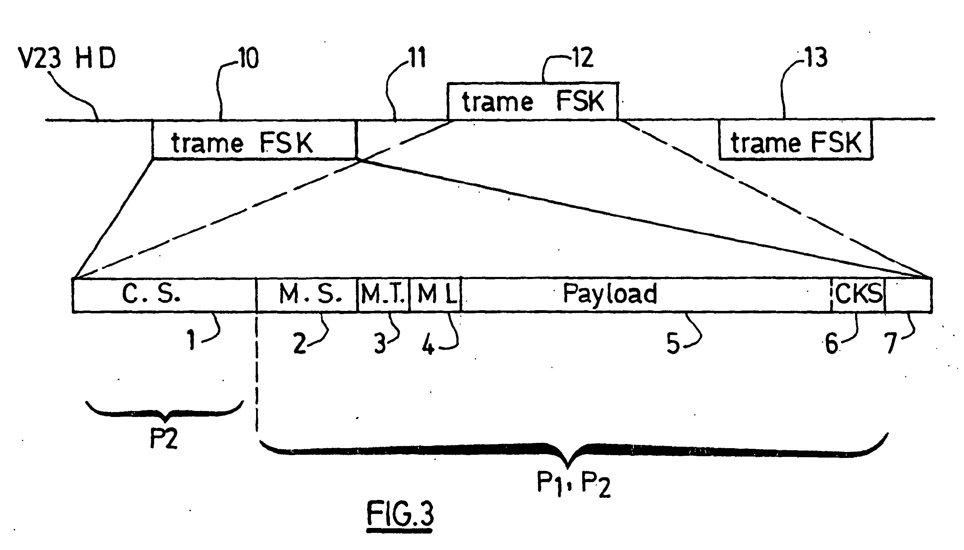

En référence à la figure 3, les trames FSK peuvent comporter plusieurs suites de bits, successivement, les suites
- 1, "Channel Seizure", 300 "Space" et "Mark" bits alternés,
- 2, "Mark signal", bloc de 80 "Mark" bits ± 25
- 3, "Message type", 1 octet désignant le type de message,
- 4, "Message Length", 1 octet désignant sa longueur,
- 5, "Payload", les données à transmettre,
- 6, "Checksum", le test d'erreurs,
- 7, une chaîne de terminaison comportant 1 à 10 "Mark" bits.

A la différence du protocole 2, qui l'exige dans les deux directions, le protocole 1 (P1) ne prévoit pas de "Channel Seizure". Ici, on va exploiter deux caractéristiques de ce processus de transmission des messages courts ci-dessus décrits.

La première caractéristique est que c'est le SM-SC, ou le terminal récepteur, qui émet la première trame FSK, selon l'un des protocoles P1 ou P2.

La seconde caractéristique est que ces deux protocoles se distinguent l'un de l'autre par la première suite 1 de bits, le "Channel Seizure". Il est alternativement ou simultanément tenu compte du contenu des messages dans DLL, car ils sont différents selon P1 ou P2.

La Table 1 suivante résume précisément le format des messages d'établissement (DLL_SMS_EST) dans le cas des protocoles P1 et P2, selon la norme ETSI ES 201 912, et fait clairement apparaître les différences (NA signifiant : « non applicable »).

**Table1**

| | **Format du message** | | | | | | |
|---|---|---|---|---|---|---|---|
| | **CS** | **MS** | **MT** | **ML** | **PL** | **CKS** | **T** |
| **P1** | NA | 111...111 | 13h | 00h | NA | CEh | 111...111 |
| | | | | | | | |
| | | 80 +- 25 "mark" bits | | | | | 1 à 10 "mark" bits |
| **P2** | 01.........01 | 111...111 | NA | NA | NA | NA | NA |
| | | | | | | | |
| | 300 "space" et "mark" bits alternés | 80 +-25 "mark" bits | | | | | |

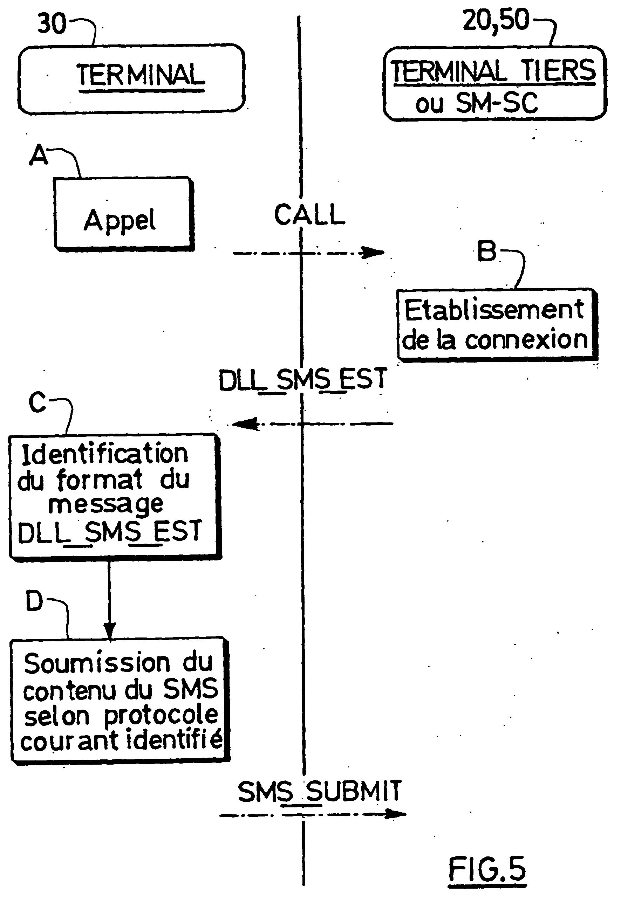

Le procédé exploitant ces différences de formats est illustré en détails à la Figure 5.

Après une étape de prise de ligne et de numérotation A consistant en l'envoi par le terminal appelant 30 d'un message d'appel (CALL) au terminal tiers ou SM-SC, une étape d'établissement de la connexion B consiste pour le terminal destinataire 20,50 à décrocher et à envoyer en retour un message d'établissement (DLL_SMS_EST). Ce message est analysé par le terminal appelant 30 dans l'étape suivante C afin d'identifier le format de la trame caractéristique du protocole utilisé. C'est selon ce protocole que le terminal appelant 30 transmettra un SMS (SMS_SUBMIT) dans la dernière étape du procédé D.

Pour cela, le terminal émetteur est équipé d'un module de détermination pour déterminer, lorsqu'il reçoit la trame d'initialisation de transfert, la présence ou non du "Channel Seizure", et donc le protocole utilisé par le destinataire, et pour utiliser ce protocole pour la suite de la transmission.

Le moyen le plus simple pour déterminer la présence de la suite alternée de 0 et de 1 caractéristique du "Channel Seizure" est un automate, notamment un compteur de caractères.

Dans le cas où l'on identifie la présence d'un contenu dans le message d'établissement, caractéristique du protocole 1 comme le montre bien la Table 1, un moyen simple pour rechercher la présence d'un mot particulier dans la trame, comme 13h (ou 00h, ou CEh), est un comparateur.

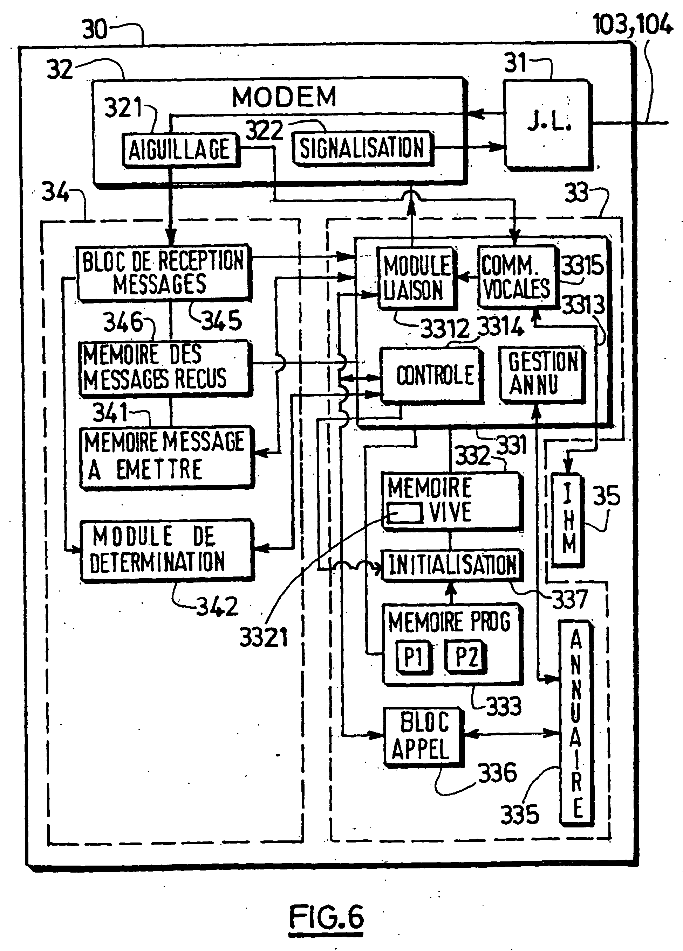

En référence à la figure 6, le terminal 30 comporte une interface 31 de ligne 103, 104, un modem 32, des moyens de calcul 33, des moyens interface utilisateur 35 et des moyens d'émission et de réception de messages courts 34.

En entrée, le modem comporte un module aiguilleur 321 recevant les signaux captés par l'interface 31 et transmettant ces signaux soit aux moyens de calcul 33, lorsqu'il s'agit d'une communication vocale (Mais le terminal n'a pas nécessairement des capacités de téléphonie), soit aux moyens d'émission et de réception 34 de messages courts, lorsqu'il s'agit de la réception d'un message court.

En sortie, le modem comporte un module de signalisation 322 recevant des données à transmettre sur la ligne 103 par l'intermédiaire de l'interface de ligne 31.

Le module de signalisation effectue les numérotations d'appel en bande vocale (en DTMFou en numérotation décimale) ou sur le canal D pour le RNIS, la transmission des signaux vocaux lorsqu'il s'agit d'une communication vocale ordinaire (si le terminal a la fonction téléphonie), et les modulations en V.23 (ou Bell ou autres modulations FSK), lorsqu'il s'agit d'une transmission de message court et les autres modulations pour les éventuelles fonctions fax, data Internet...

Ces données à transmettre étant soit des signaux vocaux, lorsqu'il s'agit d'une communication vocale, soit des données de messages courts, lorsqu'il s'agit d'une transmission de messages courts, elles sont issues d'un module dit de liaison 3312 prévu dans le microprocesseur 331 des moyens de calcul 33.

Ce module de liaison met en forme les données à transmettre en conformité avec les normes de transmission des données vocales lorsqu'elles lui parviennent d'un module de communication vocale 3315 prévu dans ce même microprocesseur pour traiter les communications vocales ordinaires, ou avec les normes de transmission des messages courts lorsqu'elles lui parviennent des moyens d'émission et de réception 34 des messages courts, c'est-à-dire avec les normes ETSI, V.23 half duplex FSK (ou Bell ou autres FSK).

Les données à transmettre, dans ce dernier cas, sont générées par un module mémoire 341 des messages à émettre prévu dans ces moyens 34 d'émission et de réception des messages courts.

Mais le module de liaison 3312 reçoit aussi des données de numérotation d'appel depuis un bloc d'appel 336 compris dans les moyens de calcul 33 et relié à un annuaire 335 de numéros d'appel, contenant éventuellement d'autres données concernant, entre autres, les protocoles P1 ou P2 à utiliser.

Les moyens de calcul 33 comportent en outre une mémoire vive 332, attachée au microprocesseur, qui contient, en fonctionnement, les programmes à exécuter par le microprocesseur (mais pas nécessairement; les programmes sont sans difficultés exécutés directement à partir des mémoires de programmes), des mémoires de travail, dont une mémoire répertoire (3321) indiquant les programmes présents dans la mémoire vive, et des moyens 337 d'initialisation de la mémoire vive à partir d'une mémoire programme 333, permanente, qui contient au moins deux programmes P1 et P2 correspondant aux protocoles P1 et P2.

Les moyens 34 d'émission et de réception des messages courts comportent en outre un bloc 345 de réception des messages courts et sa mémoire 346 des messages reçus, ainsi qu'une mémoire 341 des messages à émettre, en liaison avec le microprocesseur, et enfin, des moyens de détermination 342 de protocole utilisé dans les messages reçus dans le bloc 345. Ces moyens de détermination fournissent le résultat des déterminations effectuées à un module de contrôle 3314 prévu dans le microprocesseur 331 pour coordonner l'ensemble des opérations de communication de messages courts, en fonction notamment du contenu de la mémoire répertoire 3321 de la mémoire vive 332 et du contenu de l'annuaire 335, par l'intermédiaire d'un module interne de gestion de l'annuaire 3313.

Le fonctionnement du terminal va maintenant être expliqué.

Pour émettre un message court, l'utilisateur du terminal 30 prépare le contenu de son message sur l'interface 35. Le microprocesseur 331 transmet ce contenu à la mémoire 341 des messages à émettre et sur injonction de l'utilisateur à transmettre le message à un numéro de destinataire, charge le module de contrôle 3314 de cette transmission. Le module de contrôle lance le bloc d'appel 336 pour établir une communication vocale sur la ligne 103 par l'intermédiaire du modem 32, et de l'interface de ligne 31.

Puisqu'il s'agit d'un message court, le bloc d'appel recherche dans l'annuaire 335 un éventuel numéro de SM-SC. Si ce numéro est présent en regard du numéro de destinataire, il lui substitue ce numéro avant d'effectuer l'établissement de cette communication vocale.

Le destinataire 50, ou son intermédiaire, c'est-à-dire ici le SM-SC 20, répond par un message court selon la norme ETSI ES 201 912 en V.23 half duplex FSK (ou Bell ou autres FSK) et selon un protocole P1 ou P2. Ce message est reçu par l'interface de ligne 31 et, dans le modem 32, par le module aiguilleur 321, qui reconnaît un message court et qui le transmet au bloc de réception de messages 345. Ce dernier bloc 345 mémorise le message en mémoire 346, à toutes fins utiles et, reconnaissant un message DLL 1022 d'initialisation de transfert de données du destinataire, charge les moyens de détermination 342 de déterminer le protocole utilisé dans le message DLL 1022.

Les moyens 342 déterminent, dans ce message, la présence du "Channel Seizure" 1, c'est-à-dire des 300 "Mark" et "Space" avant le bloc 80 ± 25 "Mark" du bloc "Mark Signal" 2. Ils peuvent par exemple, pour cela, décider de son absence si, dans la suite des 55 premiers bits, il n'y a aucun "Space" ou, au contraire, de sa présence, si, dans cette même suite, ils trouvent au moins un "Space".

Ils transmettent alors au module de contrôle 3314 une information sur le protocole utilisé. Le module de contrôle peut tester si dans le répertoire 3321 de la mémoire vive 332, le programme d'exécution du protocole, qui vient d'être utilisé par le destinataire, est présent ou non. Dans ce dernier cas, le module de contrôle 3314 sollicite l'action des moyens d'initialisation 337 pour charger, à partir de la mémoire programme 333, le programme d'exécution du protocole utilisé, P1 ou P2, dans la mémoire vive 332.

Cette opération terminée, le module de contrôle lance le programme qui vient d'être ainsi chargé pour transmettre le message court se trouvant dans la mémoire 341.

Le module de contrôle, le cas échéant, met à jour l'annuaire 335 des données de protocole correspondant au numéro qui vient d'être appelé pour la transmission du message court par l'intermédiaire du module de gestion d'annuaire 3313.

## Revendications

1. Procédé d'établissement d'une communication sur un réseau de téléphonie fixe (100) selon au moins un protocole de service de message court (SMS) normalisé entre une première station (30) et une seconde station (20, 50), comportant successivement:
- une étape de prise de ligne et de numérotation (A) d'un numéro de téléphone courant par la première station (30),
- une étape de décroché et d'envoi (B) par la seconde station (20, 50) sur ledit réseau(100) à destination de la première station (30) d'un message d'établissement (DLL_SMS_EST) selon ledit protocole formant une trame de données comportant un préambule (1,2,3,4),
- une étape de soumission (D) du contenu d'un message court par la première station (30) à destination de la seconde station (20, 50),
**caractérisé par le fait que** le procédé comporte de plus une étape d'identification (C) préalable à l'étape de soumission (D) consistant à identifier dans ledit préambule (1,2,3,4) du message d'établissement (DLL_SMS_EST) la structure binaire spécifique (1) au protocole courant et l'étape de soumission (D) soumet le contenu du message court selon le protocole courant déterminé pendant l'étape d'identification (C).

2. Procédé d'établissement d'une communication sur un réseau de téléphonie fixe (100) selon au moins un protocole de service de message court selon la revendication 1, **caractérisé par le fait que** l'étape d'identification (C) consiste de plus à associer un code d'identification courant au protocole courant.

3. Procédé d'établissement d'une communication sur un réseau de téléphonie fixe (100) selon au moins un protocole de service de message court selon la revendication 2, **caractérisé par le fait que** l'étape d'identification (C) consiste de plus à stocker le code d'identification courant associé au protocole courant pour un usage ultérieur.

4. Procédé d'établissement d'une communication sur un réseau de téléphonie fixe (100) selon au moins un protocole de service de message court selon l'une quelconque des revendications 1 à 3, **caractérisé par le fait que** l'étape d'identification (C) consiste de plus à détecter dans le préambule (1,2,3,4) du message d'établissement (DLL_SMS_EST) la présence ou l'absence d'au moins un mot prédéterminé, de préférence le mot 13h, caractéristique d'un premier protocole (P1) prédéterminé.

5. Procédé d'établissement d'une communication sur un réseau de téléphonie fixe (100) selon au moins un protocole de service de message court selon l'une quelconque des revendications 1 à 4, **caractérisé par le fait que** l'étape d'identification (C) consiste de plus à détecter au début du préambule (1,2,3,4) du message d'établissement (DLL_SMS_EST) la présence ou l'absence d'une suite alternée de bits en nombre prédéterminé, au plus égal à 600, caractéristique d'un second protocole (P2) prédéterminé.

6. Terminal de télécommunication (30) adapté à la mise en oeuvre du procédé d'établissement d'une communication sur un réseau de téléphonie fixe selon l'une quelconque des revendications 1 à 5 précédentes, comportant des moyens d'émission et de réception (34) de messages courts selon au moins un protocole normalisé vers et d'un centre SM-SC (20) ou terminal tiers (50), un microprocesseur (331), une mémoire vive (332) et une mémoire programme (333) contenant au moins un programme (P1,P2) de gestion d'un protocole normalisé, **caractérisé par le fait qu'**il comporte en outre
- des moyens de détermination (342) automatique du protocole courant du SM-SC ou terminal tiers (20, 50),
- des moyens de lancement et d'exécution du programme courant correspondant au protocole courant.

7. Terminal de télécommunication selon la revendication 6 **caractérisé par le fait que** les moyens de détermination comprennent un automate, de préférence un compteur de caractères.

8. Terminal de télécommunication selon la revendication 6 **caractérisé par le fait que** les moyens de détermination comprennent un comparateur d'un nombre prédéterminé de bits.

9. Terminal de télécommunication selon l'une quelconque des revendications 6 à 8, **caractérisé par le fait qu'**il comporte un emplacement en mémoire (3321) contenant le dernier protocole utilisé.

10. Terminal de télécommunication selon l'une quelconque des revendications 6 à 9, **caractérisé par le fait qu'**il comporte un annuaire (335) qui associe un protocole à utiliser au numéro du destinataire.

11. Terminal de télécommunication selon l'une quelconque des revendications 6 à 10, **caractérisé en ce que** le microprocesseur (331) met à jour dans l'annuaire (335) les numéros d'appel des terminaux destinataires, des SM-SC, et des protocoles correspondants à utiliser.

## Patentansprüche

1. Verfahren zum Aufbau einer Kommunikation zwischen einer ersten Station (30) und einer zweiten Station (20, 50) über ein Festnetz (100) gemäß wenigstens einem normierten Kurznachrichtendienst (SMS)-Protokoll, das nacheinander umfaßt:
- einen Schritt der Leitungsverbindung und des Wählens (A) einer aktuellen Telefonnummer durch die erste Station (30)
- einen Schritt des Abnehmens und des Sendens (B) einer einen Rahmen aus Daten mit einem Vorspann (1, 2, 3, 4) bildenden Aufbaunachricht (DLL_SMS_EST) von der zweiten Station (20, 50) über das Netz (100) an die erste Station (30) gemäß dem Protokoll
- einen Schritt des Bereitstellens (D) des Inhalts einer Kurznachricht durch die erste Station (30) an die zweite Station (20, 50),
wobei das Verfahren **dadurch gekennzeichnet ist, daß** es außerdem vor dem Bereitstellschritt (D) einen Identifikationsschritt (C) aufweist, in welchem in dem Vorspann (1, 2, 3, 4) der Aufbaunachricht (DLL_SMS_EST) die für das aktuelle Protokoll spezifische binäre Struktur (1) identifiziert wird, und daß der Bereitstellschritt (D) den Inhalt der Kurznachricht gemäß dem während des Identifikationsschritts (C) bestimmten aktuellen Protokoll bereitstellt.

2. Verfahren zum Aufbau einer Kommunikation über ein Festnetz (100) gemäß wenigstens einem Kurznachrichtendienstprotokoll nach Anspruch 1, **dadurch gekennzeichnet, daß** der Identifikationsschritt (C) ferner umfaßt, daß dem aktuellen Protokoll ein aktueller Identifikationscode zugeordnet wird.

3. Verfahren zum Aufbau einer Kommunikation über ein Festnetz (100) gemäß wenigstens einem Kurznachrichtendienstprotokoll nach Anspruch 2, **dadurch gekennzeichnet, daß** der Identifikationsschritt (C) ferner umfaßt, daß der dem aktuellen Protokoll zugeordnete aktuelle Identifikationscode für eine spätere Verwendung gespeichert wird.

4. Verfahren zum Aufbau einer Kommunikation über ein Festnetz (100) gemäß wenigstens einem Kurznachrichtendienstprotokoll nach einem der Ansprüche 1 bis 3, **dadurch gekennzeichnet, daß** der Identifikationsschritt (C) ferner umfaßt, daß im Vorspann (1, 2, 3, 4) der Aufbaunachricht (DLL_SMS_EST) das Vorhandensein oder Fehlen wenigstens eines vorgegebenen Wortes, vorzugsweise des Wortes 13h, erfaßt wird, das für ein vorgegebenes erstes Protokoll (P1) charakteristisch ist.

5. Verfahren zum Aufbau einer Kommunikation über ein Festnetz (100) gemäß wenigstens einem Kurznachrichtendienstprotokoll nach einem der Ansprüche 1 bis 4, **dadurch gekennzeichnet, daß** der Identifikationsschritt (C) ferner umfaßt, daß am Anfang des Vorspanns (1, 2, 3, 4) der Aufbaunachricht (DLL_SMS_EST) das Vorhandensein oder Fehlen einer alternierenden Folge von Bits einer vorgegebenen Anzahl, höchstens gleich 600, erfaßt wird, die für ein vorgegebenes zweites Protokoll (P2) charakteristisch ist.

6. Telekommunikationsendgerät (30), das zur Durchführung des Verfahrens zum Aufbau einer Kommunikation über ein Festnetz nach einem der vorangegangenen Ansprüche 1 bis 5 eingerichtet ist, mit Mitteln zum Senden und zum Empfang (34) von Kurznachrichten gemäß wenigstens einem normierten Protokoll an eine und von einer SMS-Zentrale (SM-SC) (20) oder an ein weiteres und von einem weiteren Endgerät (50), mit einem Mikroprozessor (331), einem Schreib-Lese-Speicher (332) und mit einem wenigstens ein Programm (P1, P2) zur Verwaltung eines genormten Protokolls enthaltenden Programmspeicher (333), **dadurch gekennzeichnet, daß** es außerdem aufweist
- Mittel (342) zum automatischen Bestimmen des aktuellen Protokolls des SM-SC oder des weiteren Endgeräts (20, 50),
- Mittel zum Starten und Ausführen des dem aktuellen Protokoll entsprechenden aktuellen Programms.

7. Telekommunikationsendgerät nach Anspruch 6, **dadurch gekennzeichnet, daß** die Bestimmungsmittel einen Automaten aufweisen, vorzugsweise einen Zeichenzähler.

8. Telekommunikationsendgerät nach Anspruch 6, **dadurch gekennzeichnet, daß** die Bestimmungsmittel einen Komparator für eine vorgegebene Anzahl von Bits aufweisen.

9. Telekommunikationsendgerät nach einem der Ansprüche 6 bis 8, **dadurch gekennzeichnet, daß** es eine Stelle im Speicher (3321) aufweist, die das zuletzt verwendete Protokoll enthält.

10. Telekommunikationsendgerät nach einem der Ansprüche 6 bis 9, **dadurch gekennzeichnet, daß** es ein Verzeichnis (335) aufweist, das der Zielnummer ein zu verwendendes Protokoll zuordnet.

11. Telekommunikationsendgerät nach einem der Ansprüche 6 bis 10, **dadurch gekennzeichnet, daß** der Mikroprozessor (331) in dem Verzeichnis (335) die Rufnummern der Zielendgeräte, der SM-SCs und der zugehörigen zu verwendenden Protokolle aktualisiert.

## Claims

1. Method for establishing communication over a fixed telephone network (100) according to at least one standardised short messaging service (SMS) protocol between a first station (30) and a second station (20, 50), comprising in succession:
- a step of channel seizure and dialling (A) a current telephone number by the first station (30),
- a step of opening the line and transmission (B) by the second station (20, 50) over the said network (100) to the first station (30) of an establishing message (DLL_SMS_EST) according to the said protocol forming a frame of data comprising a preamble (1, 2, 3, 4),
- a step of submission (D) of the content of a short message by the first station (30) to the second station (20, 50),
**characterised in that** the method further comprises an identification step (C) prior to the submission step (D) consisting of identifying in the said preamble (1, 2, 3, 4) of the establishing message (DLL_SMS_EST) the binary structure (1) specific to the current protocol and the submission step (D) submits the content of the short message according to the current protocol determined during the identification step (C).

2. Method for establishing communication over a fixed telephone network (100) according to at least one short messaging service protocol as claimed in claim 1, **characterised in that** the identification step (C) also consists of associating a current identification code with the current protocol.

3. Method for establishing communication over a fixed telephone network (100) according to at least one short messaging service protocol as claimed in claim 2, **characterised in that** the identification step (C) also consists of storing the current identification code associated with the current protocol for subsequent usage.

4. Method for establishing communication over a fixed telephone network (100) according to at least one short messaging service protocol as claimed in any one of claims 1 to 3, **characterised in that** the identification step (C) also consists of detecting in the preamble (1, 2, 3, 4) of the establishing message (DLL_SMS_EST) the presence or absence of at least one predetermined word, preferably the word 13h, characteristic of a predetermined first protocol (P1).

5. Method for establishing communication over a fixed telephone network (100) according to at least one short messaging service protocol as claimed in any one of claims 1 to 4, **characterised in that** the identification step (C) also consists of detecting, at the beginning of the preamble (1, 2, 3, 4) of the establishing message (DLL_SMS_EST), the presence or absence of an alternating sequence of a predetermined number of at most 600 bits, characteristic of a predetermined second protocol (P2).

6. Telecommunication terminal (30) adapted to implementation of the method for establishing communication over a fixed telephone network as claimed in any one of the preceding claims 1 to 5, comprising means (34) for transmission and reception of short messages according to at least one standardised protocol to and from a SM-SC (20) or third terminal (50), a microprocessor (331), a random access memory (332) and a programme memory (333) containing at least one programme (P1, P2) for management of a standardised protocol, **characterised in that** it also comprises
- means (342) for automatic determination of the current protocol of the SM-SC or third terminal (20, 50),
- means for activation and execution of the current programme corresponding to the current protocol.

7. Telecommunication terminal as claimed in claim 6, **characterised in that** the determination means comprise an automaton, preferably a character counter.

8. Telecommunication terminal as claimed in claim 6, **characterised in that** the determination means comprise a comparator of a predetermined number of bits.

9. Telecommunication terminal as claimed in any one of claims 6 to 8, **characterised in that** it comprises a memory location (3321) containing the last protocol used.

10. Telecommunication terminal as claimed in any one of claims 6 to 9, **characterised in that** it comprises a directory (335) which associates a protocol to be used with the number of the recipient.

11. Telecommunication terminal as claimed in any one of claims 6 to 10, **characterised in that** the microprocessor (331) updates in the directory (335) the telephone numbers of the recipient terminals, of the SM-SC and of the corresponding protocols to be used.
